# EUROPEAN PATENT APPLICATION

(11) **EP 4 611 118 A1**
(43) Date of publication of application: **03.09.2025**
(21) Application number: 24202746.4
(22) Date of filing: 26.09.2024
(51) Int. Cl.: H01M 10/61, H01M 10/625, H01M 10/653, H01M 10/643

(54) **TEMPERATURE REGULATION MEMBER, BATTERY ASSEMBLY, AND VEHICLE**

(30) Priority: 29.02.2024 CN 202420395621 U
(71) Applicant: BYD Company Limited, Shenzhen, Guangdong 518118 (CN)
(72) Inventor: Kang, Chaohui, Shenzhen, Guangdong 518118 (CN); Liu, Taoran, Shenzhen, Guangdong 518118 (CN); Wu, Shuangshuang, Shenzhen, Guangdong 518118 (CN); Yuan, Juyang, Shenzhen, Guangdong 518118 (CN); Wang, Youyou, Shenzhen, Guangdong 518118 (CN)
(74) Representative: Mathys & Squire

(57) **Abstract**

The present disclosure discloses a temperature regulation member, a battery assembly, and a vehicle. The temperature regulation member includes a thermally conductive plate and a heating film. Each of two sides of the thermally conductive plate in a thickness direction is provided with the heating film. The heating film is configured to heat a battery core. According to the temperature regulation member in embodiments of the present disclosure, the temperature regulation member includes the thermally conductive plate and the heating film, the heating film is configured to heat the battery core, and each of the two sides of the thermally conductive plate in the thickness direction is provided with the heating film. In this way, a heating area of the temperature regulation member can be increased, so that the temperature regulation member has relatively high heating efficiency, thereby improving heating efficiency for the battery core.

## Description

### FIELD

The present disclosure relates to the technical field of batteries, and more specifically, to a temperature regulation member, a battery assembly, and a vehicle.

### BACKGROUND

In the related art, to enable a battery to operate normally in a low-temperature environment, a temperature regulation member usually needs to be arranged to heat the battery, so as to ensure that the battery can operate in a normal temperature range thereof. However, an existing temperature regulation member has relatively low heating efficiency. Therefore, the related art needs to be improved.

### SUMMARY

The present disclosure is intended to resolve at least one of technical problems in the related art. Therefore, the present disclosure is intended to provide a temperature regulation member. The temperature regulation member has a relatively large heating area, and both sides of the temperature regulation member in a thickness direction can heat a battery core. Therefore, the temperature regulation member has relatively high heating efficiency, thereby improving heating efficiency for the battery core.

The present disclosure further provides a battery assembly having the above temperature regulation member.

The present disclosure further provides a vehicle having the above battery assembly.

A temperature regulation member in an embodiment of a first aspect of the present disclosure includes a thermally conductive plate and a heating film. Each of two sides of the thermally conductive plate in a thickness direction is provided with the heating film. The heating film is configured to heat a battery core.

According to the temperature regulation member in this embodiment of the present disclosure, the temperature regulation member includes the thermally conductive plate and the heating film, the heating film is configured to heat the battery core, and each of the two sides of the thermally conductive plate in the thickness direction is provided with the heating film. In this way, a heating area of the temperature regulation member can be increased, so that the temperature regulation member has relatively high heating efficiency, thereby improving heating efficiency for the battery core.

According to some embodiments of the present disclosure, the heating film includes a heating region. The heating region is configured to heat the battery core. A projection of the heating region on a reference surface is a first projection. A projection of the thermally conductive plate on the reference surface is a second projection. The first projection is located in the second projection. The reference surface is a plane perpendicular to the thickness direction of the thermally conductive plate.

According to some embodiments of the present disclosure, a ratio of an area of the first projection to that of the second projection is in a range of 40% to 60%.

According to some embodiments of the present disclosure, a part of the thermally conductive plate located on an outer peripheral side of the heating region is a connection region. An adhesive layer is arranged in the connection region. The adhesive layer is configured to connect to the battery core.

According to some embodiments of the present disclosure, the adhesive layer is a thermally conductive adhesive layer.

According to some embodiments of the present disclosure, a projection of the connection region on the reference surface is a third projection. A ratio of an area of the third projection to that of the second projection is in a range of 40% to 60%.

According to some embodiments of the present disclosure, the heating film includes a heating structure and a thermally conductive insulation film. The heating structure is connected with a side of the thermally conductive insulation film facing the thermally conductive plate.

According to some embodiments of the present disclosure, the side of the thermally conductive insulation film facing the thermally conductive plate has a back adhesive layer. The heating film is connected to the thermally conductive plate through the back adhesive layer.

According to some embodiments of the present disclosure, the thermally conductive insulation film includes a first film region and a second film region. The heating structure is arranged in the first film region. The heating structure and the first film region jointly form a heating region. The second film region surrounds an outer periphery of the first film region, or is located on a side of the first film region, or is arranged spaced away from the first film region.

According to some embodiments of the present disclosure, a convex region and a concave region are formed on each of two sides of the thermally conductive plate in the thickness direction. The convex region and the concave region located on a same side of the thermally conductive plate in the thickness direction are alternately arranged in an extending direction of the thermally conductive plate. The concave region is configured to connect to or contact the battery core.

According to some embodiments of the present disclosure, a heating power of the convex region is less than a heating power of the concave region.

According to some embodiments of the present disclosure, the heating film includes a heating region. The heating region is configured to heat the battery core. The heating region includes multiple heating sub-regions arranged in an extending direction of the thermally conductive plate. At least some of the heating sub-regions have different power densities.

According to some embodiments of the present disclosure, the heating film includes a heating structure and a thermally conductive insulation film. The heating structure is connected with a side of the thermally conductive insulation film facing the thermally conductive plate. The heating structure and at least part of the thermally conductive insulation film form the heating region. The heating structure includes multiple heating sub-structures. The multiple heating sub-structures are successively arranged in series or in parallel. The heating sub-structures and the heating sub-regions are of a same quantity and are in one-to-one correspondence.

According to some embodiments of the present disclosure, the thermally conductive plate is even heat plate.

According to some embodiments of the present disclosure, a heat exchange flowing channel for a heat exchange medium to flow is formed in the thermally conductive plate.

A battery assembly in an embodiment of a second aspect of the present disclosure includes multiple battery core rows and the temperature regulation member in the embodiment of the above first aspect of the present disclosure. The multiple battery core rows are arranged in a first direction. Each battery core row includes multiple battery cores arranged in a second direction. The second direction intersects the first direction. The temperature regulation member is arranged between two adjacent battery core rows. The heating film is in thermally conductive connection or contact with each battery core.

In the battery assembly in this embodiment of the present disclosure, the above temperature regulation member is arranged. Since the temperature regulation member has a relatively large heating area, the temperature regulation member has relatively high heating efficiency. In addition, since the temperature regulation member is arranged between two adjacent battery core rows, battery cores located on both sides of the temperature regulation member in the thickness direction can be heated, thereby improving heating efficiency for the battery cores.

According to some embodiments of the present disclosure, the second direction is perpendicular to the first direction.

According to some embodiments of the present disclosure, the heating film is in direct contact with the battery core.

According to some embodiments of the present disclosure, a ratio of a size of the thermally conductive plate in a third direction to a size of the battery core in the third direction is in a range of 50% to 80%. The third direction, the second direction, and the first direction intersect each other.

According to some embodiments of the present disclosure, multiple temperature collection points are arranged on a single battery core row. The multiple of temperature collection points on the single battery core row are arranged at intervals in the second direction. A ratio of a quantity of the temperature collection points of the single battery core row to a quantity of the battery cores of the single battery core row is in a range of 1/4 to 1/2.

According to some embodiments of the present disclosure, the heating film includes a heating region. The heating region is configured to heat the battery core. The heating region includes multiple heating sub-regions arranged in an extending direction of the thermally conductive plate. At least some of the heating sub-regions have different power densities. In the second direction, power densities of the heating sub-region located at a middle part of the battery core row are greater than power densities of the heating sub-regions located on two ends of the battery core row.

According to some embodiments of the present disclosure, the multiple heating sub-regions include two first heating sub-regions, two second heating sub-regions, two third heating sub-regions, and one fourth heating sub-region. The fourth heating sub-region is located at the middle part of the battery core row in the second direction. In the second direction, the fourth heating sub-region, the third heating sub-regions, the second heating sub-regions, and the first heating sub-regions are arranged in sequence and have gradually increasing power densities in a direction from the middle part of the battery core row to the two ends of the battery core row.

According to some embodiments of the present disclosure, in the second direction, a ratio of a size of each second heating sub-region to a size of each first heating sub-region is in a range of 1.8 to 2, a ratio of a size of each third heating sub-region to the size of the first heating sub-region is in a range of 1.7 to 1.9, and a ratio of a size of the fourth heating sub-region to the size of the first heating sub-region is in a range of 2.3 to 3.6.

A vehicle in an embodiment of a third aspect of the present disclosure includes the battery assembly in the embodiment of the above second aspect of the present disclosure.

In the vehicle in this embodiment of the present disclosure, the above battery assembly is arranged, the temperature regulation member is arranged between two adjacent battery core rows of the battery assembly, the temperature regulation member includes the thermally conductive plate and the heating film, and the heating film is in thermally conductive connection or contact with the battery core, so that heat can be transferred to the battery core to heat the battery core. In addition, each of the two sides of the thermally conductive plate in the thickness direction is provided with the heating film, so that the temperature regulation member between two battery core rows can simultaneously heat the two battery core rows, thereby improving heating efficiency for the battery core.

Part of additional aspects and advantages of the present disclosure is provided in the following description. The part becomes apparent from the following description, or is learned by practice of the present disclosure.

### BRIEF DESCRIPTION OF THE DRAWINGS

The above and/or additional aspects and advantages of the present disclosure become apparent and comprehensible from the description of embodiments provided with reference to the following drawings.
FIG. 1 is a schematic diagram of mating between a battery core row and a temperature regulation member of a battery assembly according to some embodiments of the present disclosure;
FIG. 2 is a partial enlarged view of a part A in FIG. 1;
FIG. 3 is a cross-sectional view along a line B-B in FIG. 1;
FIG. 4 is a partial enlarged view of a part C in FIG. 3; and
FIG. 5 is an arrangement diagram of multiple temperature regulation members of a battery assembly according to some embodiments of the present disclosure.

In the drawings:
100. Battery assembly;
10. Battery core row; 11. Battery core; 12. Battery core contact surface; 13. Gap;
20. Temperature regulation member; 21: Thermally conductive plate; 22. Connection region; 23. Concave region; 24. Heat exchange flowing channel; 25. Convex region;
30. Heating film; 31. Thermally conductive insulation film; 32. First film region; 33: Heating structure; 34. Second film region; 35: Thermally conductive adhesive layer; 36. Heating region; 37. Heating sub-region; 371. First heating sub-region; 372. Second heating sub-region; 373. Third heating sub-region; 374. Fourth heating sub-region.

### DETAILED DESCRIPTION

Embodiments of the present disclosure are described in detail below, and examples of the embodiments are shown in drawings. Same or similar reference numerals throughout the description represent same or similar elements or elements having same or similar functions. The embodiments described below with reference to the drawings are exemplary, which are merely used for explaining the present disclosure, and cannot be construed as a limitation on the present disclosure.

A temperature regulation member 20 in the embodiments of the present disclosure is described below with reference to the drawings. The temperature regulation member 20 may be configured to regulate a temperature of a battery core 11.

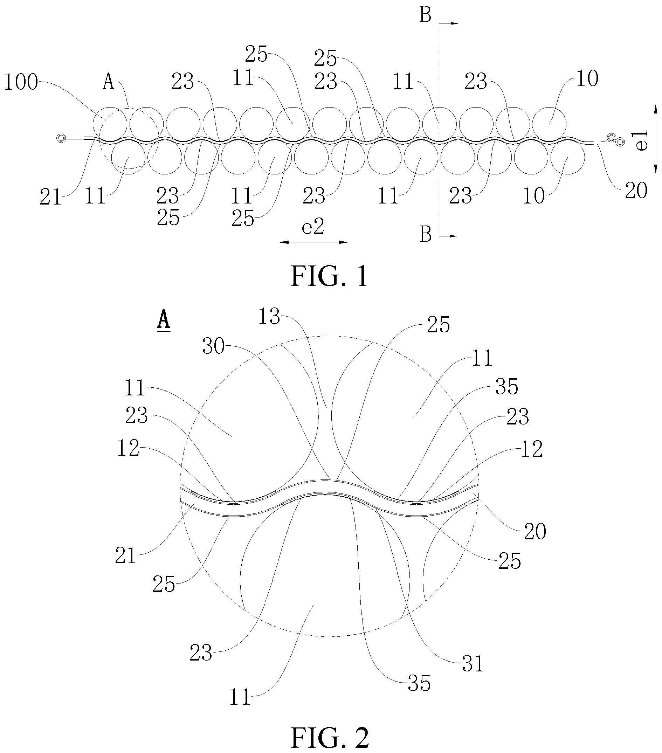

Referring to FIG. 1 to FIG. 2, a temperature regulation member 20 according to an embodiment of a first aspect of the present disclosure is provided. The temperature regulation member 20 includes a thermally conductive plate 21 and a heating film 30. Each of two sides of the thermally conductive plate 21 in a thickness direction is provided with the heating film 30. The heating film 30 is configured to heat the battery core 11.

The heating film 30 of the temperature regulation member 20 is arranged to heat the battery core 11. Therefore, the temperature regulation member 20 can regulate a temperature of the battery core 11, so that the battery core 11 can operate in a normal temperature range thereof, which can improve operating efficiency and a service life of the battery core 11 to a specific extent.

Since each of the two sides of the thermally conductive plate 21 in the thickness direction is provided with the heating film 30, the temperature regulation member 20 can have a relatively large heating area, and both sides of the temperature regulation member 20 can heat the battery core 11, so that the temperature regulation member 20 has relatively high heating efficiency.

In addition, the heating film 30 is arranged on the thermally conductive plate 21. Since the thermally conductive plate 21 has desirable thermal conductivity, heat of the heating film 30 can be dispersed through the thermal conductivity of the thermally conductive plate 21, which can ameliorate to a specific extent a phenomenon of an excessively high local temperature as a result of local heat concentration on the temperature regulation member 20. The thermally conductive plate 21 may be a metal plate. For example, the thermally conductive plate 21 may be an aluminum plate, a copper plate, or the like. The thermally conductive plate 21 may be even heat plate, which can avoid the phenomenon of the excessively high local temperature as a result of the local heat concentration on the temperature regulation member 20 more effectively.

According to the temperature regulation member 20 in this embodiment of the present disclosure, the temperature regulation member 20 includes the thermally conductive plate 21 and the heating film 30, the heating film 30 is configured to heat the battery core 11, and each of the two sides of the thermally conductive plate 21 in the thickness direction is provided with the heating film 30. In this way, a heating area of the temperature regulation member 20 can be increased, so that the temperature regulation member 20 has relatively high heating efficiency, thereby improving heating efficiency for the battery core 11.

Referring to FIG. 1 to FIG. 2, according to some embodiments of the present disclosure, the heating film 30 includes a heating region 36. The heating region 36 is configured to heat the battery core 11. A projection of the heating region 36 on a reference surface is a first projection. A projection of the thermally conductive plate 21 on the reference surface is a second projection. The first projection is located in the second projection. In this way, the entire heating region 36 can cover the thermally conductive plate 21, so that heat generated by the heating region 36 can be transferred to the thermally conductive plate 21, and the heat generated by the heating region 36 can be fully utilized, and can be dispersed on the thermally conductive plate 21 through the thermal conductivity.

According to some embodiments of the present disclosure, a ratio of an area of the first projection to the area of the second projection is in a range of 40% to 60%. For example, the ratio of the area of the first projection to the area of the second projection may be 40%, 45%, 50%, 55%, 60%, or the like. The reference surface is a plane perpendicular to the thickness direction of the thermally conductive plate 21. If the ratio of the area of the first projection to the area of the second projection is less than 40%, the heating region 36 has a relatively small area, resulting in a relatively poor heating effect of the temperature regulation member 20. If the ratio of the area of the first projection to the area of the second projection is greater than 60%, the heating region 36 has a relatively large area, resulting in relatively high production costs of the heating region 36.

Through the setting of the ratio of the area of the first projection to the area of the second projection to be in the range of 40% to 60%, the heating region 36 of the heating film 30 has a relatively proper area, so that the temperature regulation member 20 has relatively high heating efficiency and relatively low production costs.

Referring to FIG. 1 to FIG. 2, according to some embodiments of the present disclosure, a part of the thermally conductive plate 21 located on an outer peripheral side of the heating region 36 is a connection region 22. An adhesive layer 35 is arranged in the connection region 22. The adhesive layer 35 is configured to connect to the battery core 11. The temperature regulation member 20 is connected to the battery core 11 through the adhesive layer 35. Through the arrangement of the adhesive layer 35 in the connection region 22, the temperature regulation member 20 may be connected to the battery core 11 through the adhesive layer 35. The connection region 22 is located on the outer peripheral side of the heating region 36, so that the connection region 22 has a relatively large connection area. In this way, the connection between the temperature regulation member 20 and the battery core 11 can be relatively stable. In addition, since each of the two sides of the temperature regulation member 20 is provided with the thermally conductive adhesive layer 35, and the adhesive layers are connected with two adjacent battery core rows 10, a relatively large adhesive application area exists between the temperature regulation member 20 and the battery core 11, which further improves overall structural stability of a battery assembly 100.

Optionally, the adhesive layer 35 may be a thermally conductive adhesive layer. In this case, the adhesive layer 35 has relatively high thermal conductivity, which can ensure a heat transfer effect between the temperature regulation member 20 and the battery core 11.

Referring to FIG. 2 and FIG. 3 to FIG. 4, according to some embodiments of the present disclosure, the projection of the thermally conductive plate 21 on the reference surface is the second projection, a projection of the connection region 22 on the reference surface is a third projection, and a ratio of an area of the third projection to an area of the second projection is in a range of 40% to 60%. For example, the ratio of the area of the third projection to the area of the second projection may be 40%, 45%, 50%, 55%, 60%, or the like. The reference surface is a plane perpendicular to the thickness direction of the thermally conductive plate 21. If the ratio of the area of the third projection to the area of the second projection is less than 40%, the connection region 22 has a relatively small area, resulting in relatively poor stability of the connection between the temperature regulation member 20 and the battery core 11. If the ratio of the area of the third projection to the area of the second projection is greater than 60%, the connection region 22 has a relatively large area, and the heating region 36 correspondingly has a relatively small area, resulting in relatively low heating efficiency of the temperature regulation member 20.

Through the setting of the ratio of the area of the third projection to that of the second projection to be in the range of 40% to 60%, the heating region 36 has a relatively proper area, which can ensure relatively stable connection between the temperature regulation member 20 and the battery core 11, and can ensure relatively high heating efficiency of the temperature regulation member 20.

Referring to FIG. 2 and FIG. 3 to FIG. 4, according to some embodiments of the present disclosure, the heating film 30 includes a heating structure 33 and a thermally conductive insulation film 31. The heating structure 33 is connected with a side of the thermally conductive insulation film 31 facing the thermally conductive plate 21. The heating structure 33 is located between the thermally conductive insulation film 31 and the thermally conductive plate 21. The heating film 30 includes the heating structure 33 and the thermally conductive insulation film 31, and the heating structure 33 is connected with the side of the thermally conductive insulation film 31 facing the thermally conductive plate 21. Through the arrangement of the thermally conductive insulation film 31 which can provide insulation and isolation, a short circuit as a result of contact between the heating structure 33 and the battery core 11 can be avoided, thereby improving safety of the battery assembly 100.

Optionally, the heating structure 33 may be a heating wire or a heating sheet.

Referring to FIG. 2 and FIG. 3 to FIG. 4, according to some embodiments of the present disclosure, the heating film 30 includes the heating structure 33 and the thermally conductive insulation film 31. The side of the thermally conductive insulation film 31 facing the thermally conductive plate 21 has a back adhesive layer. The heating structure 33 is connected with the side of the thermally conductive insulation film 31 facing the thermally conductive plate 21. The heating film 30 is connected to the thermally conductive plate 21 through the back adhesive layer. The heating structure 33 is located between the thermally conductive insulation film 31 and the thermally conductive plate 21. The heating film 30 includes the heating structure 33 and the thermally conductive insulation film 31, and the heating film 30 is connected to the thermally conductive plate 21 through the back adhesive layer. In addition, the heating structure 33 connected with the side of the thermally conductive insulation film 31 facing the thermally conductive plate 21 can be fixed to the thermally conductive plate 21. In this way, the fitting is simple, and the connection is stable. In addition, through the arrangement of the thermally conductive insulation film 31 which can provide insulation and isolation, the short circuit as a result of the contact between the heating structure 33 and the battery core 11 can be avoided, thereby improving the safety of the battery assembly 100.

Referring to FIG. 2 and FIG. 3 to FIG. 4, according to some embodiments of the present disclosure, the thermally conductive insulation film 31 includes a first film region 32 and a second film region 34. The heating structure 33 is arranged in the first film region 32. The heating structure 33 and the first film region 32 jointly form the heating region 36. The second film region 34 surrounds an outer periphery of the first film region 32. The first film region 32 and the second film region 34 are arranged, the heating structure 33 and the first film region 32 jointly form the heating region 36, the second film region 34 surrounds the outer periphery of the first film region 32, or the second film region 34 is located on a side of the first film region 32, or the second film region 34 is arranged spaced away from the first film region 32.

The side of the thermally conductive insulation film 31 facing the thermally conductive plate 21 has the back adhesive layer. A back adhesive layer on a side of the first film region 32 of the thermally conductive insulation film 31 facing the thermally conductive plate 21 can connect the heating structure 33 to the thermally conductive insulation film 31, a back adhesive layer on a side of the second film region 34 of the thermally conductive insulation film 31 facing the thermally conductive plate 21 can fix the thermally conductive insulation film 31 and the heating structure 33 to the thermally conductive plate 21, and the second film region 34 surrounds the outer periphery of the first film region 32. In this way, a relatively large connection area can be provided between the heating film 30 and the thermally conductive plate 21, so that the connection between the heating film 30 and the thermally conductive plate 21 is relatively stable.

In some embodiments of the present disclosure, the part of the thermally conductive plate 21 located on the outer peripheral side of the heating region 36 is the connection region 22. The adhesive layer 35 is arranged in the connection region 22. The temperature regulation member 20 is connected to the battery core 11 through the adhesive layer 35. Through the arrangement of the adhesive layer 35 in the connection region 22, the temperature regulation member 20 may be connected to the battery core 11 through the adhesive layer 35. In addition, the thermally conductive insulation film 31 includes the first film region 32 and the second film region 34. The heating structure 33 is arranged in the first film region 32. The heating structure 33 and the first film region 32 jointly form the heating region 36. If the second film region 34 covers the entire connection region 22, the adhesive layer 35 may be arranged on a side of the second film region 34 facing away from the thermally conductive plate 21. If the second film region 34 covers a part of the connection region 22, the adhesive layer 35 may be arranged on the side of the second film region 34 facing away from the thermally conductive plate 21 and in a region of the connection region 22 not covered by the second film region 34.

Referring to FIG. 1 to FIG. 2, according to some embodiments of the present disclosure, a convex region 25 and a concave region 23 are formed on each of the two sides of the thermally conductive plate 21 in the thickness direction. The convex region 25 and the concave region 23 on a same side of the thermally conductive plate 21 in the thickness direction are alternately arranged in a second direction. The concave region 23 is configured to connect to or contact the battery core 11. The convex region 25 is opposite to a gap 13 between two adjacent battery cores 11. A shape of the heating film 30 may match a shape of the thermally conductive plate 21. A shape of the concave region 23 may match a shape of the battery core 11. A part of the battery core 11 is accommodated in the concave region 23. Battery cores 11 of the two battery core rows 10 located on the two sides the thermally conductive plate 21 in the thickness direction may be arranged to be connected with the concave region 23, and each of the two sides the thermally conductive plate 21 in the thickness direction is provided with the heating film 30, so that the temperature regulation member 20 can have relatively high heating efficiency. In addition, the battery core 11 is connected with the concave region 23. For example, the shape of the heating film 30 matches the shape of the thermally conductive plate 21, the shape of the concave region 23 matches the shape of the battery core 11, and a part of the battery core 11 is accommodated in the concave region 23. In this way, a space can be fully utilized, so that the battery assembly 100 has an overall compact structure.

According to some embodiments of the present disclosure, a heating power of the convex region 25 is less than a heating power of the concave region 23. The heating power of the concave region 23 connected or in contact with the battery core 11 is set to be greater than the heating power of the convex region 25, so that a relatively large amount of heat generated by the concave region 23 can be quickly transferred to the battery core 11, thereby improving the heating efficiency for the battery core 11. In addition, the heating power of the convex region 25 is set to be smaller. Since the convex region 25 is not connected or in contact with the battery core 11, energy consumption can be reduced while the heating efficiency is improved.

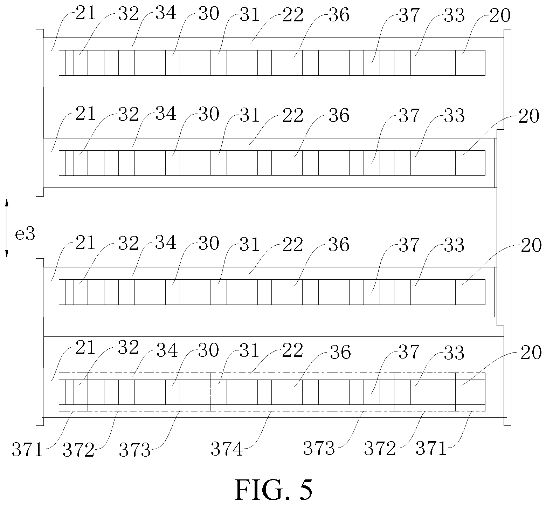

Referring to FIG. 1 and FIG. 5, according to some embodiments of the present disclosure, the heating film 30 includes the heating region 36. The heating region 36 is used for heating the battery core 11. The heating region 36 includes multiple heating sub-regions 37 arranged in an extending direction of the thermally conductive plate 21. At least some of the heating sub-regions 37 have different power densities. To be specific, some of the heating sub-regions 37 may have different power densities, or all of the heating sub-regions 37 may have different power densities. The heating region 36 is arranged to include the heating sub-regions 37 with different power densities, so that the heating sub-regions 37 of the heating region 36 with the different power densities can heat battery cores 11 with different heating demands, thereby saving energy and reducing energy consumption while satisfying the different heating demands of the battery cores 11.

For example, battery cores 11 of a battery core row 10 at different positions have different heat dissipation rates. For example, battery cores 11 located on two ends of the battery core row 10 have higher heat dissipation rates, and battery cores 11 located at a middle part of the battery core row 10 have lower heat dissipation rates. Since the multiple heating sub-regions 37 are arranged in the heating region 36 in the second direction, and at least some of the heating sub-regions 37 have different power densities, the heat dissipation rates of the battery cores 11 at the different positions can be equalized, so that the battery cores 11 of the battery core row 10 have a relatively uniform temperature rising rate. In this way, the heating region 36 can heat the battery cores 11 of the battery core row 10 more uniformly.

In addition, through the arrangement of the multiple heating sub-regions 37, when a part of the heating region 36 is damaged or faulty, the heating region 36 can be replaced and repaired conveniently, which reduces repair costs. For example, when a part of the heating region 36 is damaged or faulty, only the heating sub-region 37 corresponding to the damaged or faulty part may be replaced, without a need to replace or repair the entire heating region 36.

Referring to FIG. 1 and FIG. 5, according to some embodiments of the present disclosure, the heating film 30 includes the heating structure 33 and the thermally conductive insulation film 31. The heating structure 33 is connected with the side of the thermally conductive insulation film 31 facing the thermally conductive plate 21. The heating structure 33 and at least part of the thermally conductive insulation film 31 form the heating region 37. The heating film 30 includes the heating structure 33 and the thermally conductive insulation film 31, and the heating film 30 may be connected to the thermally conductive plate 21 through the back adhesive layer. In addition, the heating structure 33 connected with the side of the thermally conductive insulation film 31 facing the thermally conductive plate 21 can be fixed to the thermally conductive plate 21. In this way, the fitting is simple, and the connection is stable.

The heating structure 33 includes multiple heating sub-structures. The multiple heating sub-structures are successively arranged in series or in parallel. The heating sub-structures and the heating sub-regions 37 are of a same quantity and are in one-to-one correspondence. Since the multiple heating sub-structures are successively arranged in series or in parallel, the connection manner is relatively simple, and the heating region 36 can be conveniently divided into the multiple heating sub-regions 37 with the different power densities.

For example, the heating structure 33 is a heating wire. A cross-sectional area of the heating wire may be adjusted, to adjust a resistance value of the heating wire. In this way, different heating sub-regions 37 in one-to-one correspondence with different heating wires have different power densities. If multiple heating wires are arranged in series, a larger cross-sectional area of each heating wire leads to a smaller resistance value of the heating wire and a smaller power density of the heating sub-region 37 corresponding to the heating wire. If the multiple heating wires are arranged in parallel, a larger cross-sectional area of each heating wire leads to a smaller resistance value of the heating wire and a smaller power density of the heating sub-region 37 corresponding to the heating wire.

Referring to FIG. 1 to FIG. 2, according to some embodiments of the present disclosure, the thermally conductive plate 21 is even heat plate. The vapor chamber has relatively desirable thermal conductivity and a relatively uniform heat flux, which can transfer and equalize the heat of the heating film 30, so that the temperature regulation member 20 has a relatively uniform heating effect. For example, when the heating film 30 has a region not in thermally conductive connection or contact with the battery core 11, heat generated in the region of the heating film 30 is transferred through the thermally conductive plate 21 to a corresponding region of the heating film 30 in thermally conductive connection or contact with the battery core 11, which can avoid dry heating of the heating film 30, thereby improving the heating efficiency and the heating effect of the temperature regulation member 20.

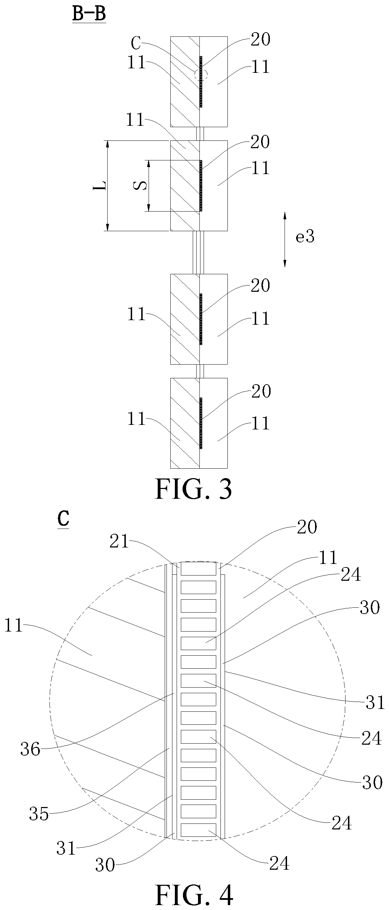

Referring to FIG. 3 to FIG. 4, according to some embodiments of the present disclosure, a heat exchange flowing channel 24 for a heat exchange medium to flow is formed in the thermally conductive plate 21. The heat exchange medium, for example, a refrigerant, in the heat exchange flowing channel 24 in the thermally conductive plate 21 may exchange heat with the battery core 11 through the thermally conductive plate 21, to achieve a temperature regulation function, for example, a heat dissipation function, of the temperature regulation member 20.

When the battery core 11 in the battery assembly 100 has a relatively low temperature and needs to be heated, the heating region 36 of the heating film 30 is brought into thermally conductive connection or contact with the battery core 11, and directly heats the battery core 11, which can achieve a heating function of the temperature regulation member 20. In this case, no heat exchange medium flows in the heat exchange flowing channel 24 in the thermally conductive plate 21. When the battery core 11 in the battery assembly 100 has a relatively high temperature and requires heat dissipation, the heat exchange medium flows through the heat exchange flowing channel 24 of the thermally conductive plate 21 and exchanges heat with the battery core 11, which can achieve the heat dissipation function of the temperature regulation member 20. In this case, the heating film 30 does not operate. The temperature regulation member 20 can not only heat the battery core 11 but also dissipate heat from the battery core 11, so that it can be ensured that the battery core 11 operates in a normal temperature range thereof, thereby improving operating efficiency and a service life of the battery core 11.

A battery assembly 100 in the embodiments of the present disclosure is described below with reference to the drawings. In some embodiments of the present disclosure, the battery assembly 100 may include a battery module or a battery pack.

Referring to FIG. 1 to FIG. 2, a battery assembly 100 according to an embodiment of a second aspect of the present disclosure is provided. The battery assembly 100 includes multiple battery core rows 10 arranged in a first direction (refer to a direction e1 in the drawing). Each battery core row 10 includes multiple battery cores 11 arranged in a second direction (refer to a direction e2 in the drawing). The second direction intersects the first direction. For example, the second direction is perpendicular to the first direction. The multiple battery cores 11 are arranged in the second direction to form a battery core row 10. The multiple battery core rows 10 are arranged in the first direction, and the multiple battery core rows 10 are arranged compactly, which helps improve an energy density of the battery pack. The first direction may be the same as a thickness direction of a thermally conductive plate 21. The second direction may be the same as an extending direction of the thermally conductive plate 21.

It should be noted that, "multiple" in the present disclosure means two or more.

The battery assembly 100 further includes a temperature regulation member 20. The temperature regulation member 20 may be the temperature regulation member 20 in the embodiment of the above first aspect. The temperature regulation member 20 is arranged between two adjacent battery core rows 10. The temperature regulation member 20 includes a thermally conductive plate 21 and a heating film 30. Each of two sides of the thermally conductive plate 21 in a thickness direction is provided with the heating film 30. The heating film 30 is in thermally conductive connection or contact with each battery core 11. For example, the heating film 30 includes a heating region 36 having a heating structure 33. The heating region 36 is in thermally conductive connection or contact with the battery core 11. Through the arrangement of the temperature regulation member 20 which can regulate a temperature of the battery core 11, the battery core 11 can operate in a normal temperature range thereof, which can improve operating efficiency and a service life of the battery core 11 to a specific extent.

The temperature regulation member 20 includes the thermally conductive plate 21 and the heating film 30. Each of the two sides of the thermally conductive plate 21 in the thickness direction is provided with the heating film 30. The heating film 30 is in thermally conductive connection or contact with the battery core 11. For example, the heating film 30 includes the heating region 36 having the heating structure 33. The heating region 36 is in thermally conductive connection or contact with the battery core 11, so that heat can be transferred to the battery core 11 to heat the battery core 11. Since each of the two sides of the thermally conductive plate 21 in the thickness direction is provided with the heating film 30, the temperature regulation member 20 between two battery core rows 10 can simultaneously heat the two battery core rows 10. In this way, the temperature regulation member 20 has relatively high heating efficiency.

Optionally, that the heating film 30 or the heating region 36 is in thermally conductive contact with the battery core 11 may include that the heating film 30 or the heating region 36 may be brought into direct contact with the battery core 11 to form thermally conductive contact, so that heat transfer can be performed, thereby controlling a temperature of the battery core 11 to be in a normal operating temperature.

Optionally, that the heating film 30 or the heating region 36 is in thermally conductive connection with the battery core 11 may include that a thermally conductive layer may be arranged between the heating film 30 or the heating region 36 and the battery core 11, to perform thermally conductive connection through the thermally conductive layer. For example, the thermally conductive layer may adopt a thermally conductive adhesive layer 35, thermally conductive silicone grease, or a thermally conductive pad, to ensure a heat transfer effect between the heating film 30 or the heating region 36 and the battery core 11.

In addition, the heating film 30 is arranged on the thermally conductive plate 21. Since the thermally conductive plate 21 has desirable thermal conductivity, heat of the heating film 30 can be dispersed through thermal conductivity of the thermally conductive plate 21, which avoids a phenomenon of an excessively high local temperature as a result of local heat concentration on the temperature regulation member 20, thereby avoiding dry heating of the heating film 30. The thermally conductive plate 21 may be a metal plate. For example, the thermally conductive plate 21 may be an aluminum plate, a copper plate, or the like. The thermally conductive plate 21 may be even heat plate, which can avoid the phenomenon of the excessively high local temperature as a result of the local heat concentration on the temperature regulation member 20 more effectively.

In the battery assembly 100 in this embodiment of the present disclosure, the above temperature regulation member 20 is arranged. The temperature regulation member 20 has a relatively large heating area, so that the temperature regulation member 20 has relatively high heating efficiency. The temperature regulation member 20 is arranged between two adjacent battery core rows 10 of the battery assembly 100. The temperature regulation member 20 includes the thermally conductive plate 21 and the heating films 30. The heating film 30 is in thermally conductive connection or contact with the battery core 11, so that heat can be transferred to the battery core 11 to heat the battery core 11. In addition, each of the two sides of the thermally conductive plate 21 in the thickness direction is provided with the heating film 30, so that the temperature regulation member 20 between two battery core rows 10 can simultaneously heat the two battery core rows 10, thereby improving heating efficiency for the battery core 11.

Referring to FIG. 1 to FIG. 2, according to some embodiments of the present disclosure, the heating film 30 is in direct contact with the battery core 11. Thermally conductive contact is formed between the heating film 30 and the battery core 11 through the direct contact between the heating film 30 and the battery core 11. The heating film 30 of the temperature regulation member 20 is in direct and thermally conductive contact with the battery core 11, so that direct heat exchange can be achieved between the heating film 30 and the battery core 11 through the direct contact, which reduces a loss during the heat exchange, and enables the temperature regulation member 20 to have high heating efficiency, so that a temperature of the battery core 11 can be quickly increased, thereby helping improve performance of the battery pack.

For example, the heating film 30 includes the heating region 36, and the heating region 36 of the heating film 30 is in direct contact with the battery core 11. Thermally conductive contact is formed between the heating region 36 and the battery core 11 through the direct contact between the heating region 36 of the heating film 30 and the battery core 11. The heating region 36 of the temperature regulation member 20 is in direct and thermally conductive contact with the battery core 11, so that direct heat exchange can be achieved between the heating region 36 and the battery core 11 through the direct contact, which reduces a loss during the heat exchange, and enables the temperature regulation member 20 to have high heating efficiency, so that the temperature of the battery core 11 can be quickly increased, thereby helping improve the performance of the battery pack.

Referring to FIG. 1 to FIG. 2, according to some embodiments of the present disclosure, the heating film 30 is in direct contact with the battery core 11. The thermally conductive plate 21 is even heat plate. Since the heating film 30 is in direct contact with the battery core 11, a function of heating the battery core 11 can be implemented, and heating efficiency is relatively high. In addition, the vapor chamber has relatively desirable thermal conductivity and a relatively uniform heat flux, which can transfer and equalize the heat of the heating film 30, so that the temperature regulation member 20 has a relatively uniform heating effect.

Referring to FIG. 1 to FIG. 2, according to some embodiments of the present disclosure, surfaces on two opposite sides of the battery core 11 in the first direction each include a battery core contact surface 12. The battery core contact surface 12 refers to a surface of the battery core 11 in direct or indirect contact with the temperature regulation member 20. The heating film 30 or the heating region 36 is in thermally conductive connection or contact with the battery core contact surface 12. The surfaces on the two opposite sides of the battery core 11 in the first direction have relatively large areas, which can increase a heat transfer area between the temperature regulation member 20 and the battery core 11, thereby improving heat dissipation efficiency of the temperature regulation member 20.

A ratio of a size S (refer to FIG. 3) of the thermally conductive plate 21 in a third direction (refer to a direction e3 in the drawing) to a size L (refer to FIG. 3) of the battery core 11 in the third direction is in a range of 50% to 80%. For example, the ratio of the size of the thermally conductive plate 21 in the third direction to the size of the battery core 11 in the third direction may be 50%, 60%, 70%, 80%, or the like. The third direction, the second direction, and the first direction intersect each other. For example, the third direction, the second direction, and the first direction are perpendicular to each other. If the ratio of the size of the thermally conductive plate 21 in the third direction to the size of the battery core 11 in the third direction is less than 50%, the thermally conductive plate 21 has a relatively small area, thereby resulting in a relatively poor heating effect of the temperature regulation member 20. If the ratio of the size of the thermally conductive plate 21 in the third direction to the size of the battery core 11 in the third direction is greater than 80%, the thermally conductive plate 21 has a relatively large area, resulting in relatively high costs of the temperature regulation member and a relatively large space occupation of the temperature regulation member 20.

Through the setting of the ratio of the size of the thermally conductive plate 21 in the third direction to the size L of the battery core 11 in the third direction to be in the range of 50% to 80%, the temperature regulation member 20 has a relatively proper area, so that the temperature regulation member 20 can have relatively high heating efficiency, and a space can be fully utilized, which realizes a relatively compact structure of the battery assembly 100.

Referring to FIG. 1 to FIG. 2, according to some embodiments of the present disclosure, multiple temperature collection points are arranged on a single battery core row 10. The multiple temperature collection points on the single battery core row 10 are arranged at intervals in the second direction. Through the arrangement of the multiple temperature collection points on the battery core row 10 at intervals in the second direction, temperature changes of the battery cores 11 of the battery core row 10 can be accurately and comprehensively obtained, which facilitates regulation of the temperature regulation member 20, to ensure that the battery cores 11 of the battery core row 10 can operate at a normal operating temperature, and reduce or avoid nonuniform temperatures of the battery cores 11 of the battery core row 10.

A ratio of a quantity of the temperature collection points of the single battery core row 10 to a quantity of the battery cores 11 of the single battery core row 10 is in a range of 1/4 to 1/2. For example, the ratio of the quantity of the temperature collection points of the single battery core row 10 to the quantity of the battery cores 11 of the single battery core row 10 may be 1/4, 5/16, 7/16, 1/2, or the like. If the ratio of the quantity of the temperature collection points of the single battery core row 10 to the quantity of the battery cores 11 of the single battery core row 10 is less than 1/4, the quantity of temperature collection points is relatively small, which leads to a failure of accurately obtaining a temperature change of the battery core row 10. If the ratio of the quantity of the temperature collection points of the single battery core row 10 to the quantity of the battery cores 11 of the single battery core row 10 is greater than 1/2, the quantity of the temperature collection points is relatively large, which leads to an increase in production costs of the battery core row 10.

Through the setting of the ratio of the quantity of the temperature collection points of the single battery core row 10 to the quantity of the battery cores 11 of the single battery core row 10 to be in the range of 1/4 to 1/2, the temperature changes of the battery cores 11 of the battery core row 10 can be accurately and comprehensively obtained, and an increase in the production costs of the single battery core row 10 as a result of an excessively large quantity of temperature collection points on the single battery core row 10 can be avoided.

Referring to FIG. 1 and FIG. 5, according to some embodiments of the present disclosure, the heating film 30 includes the heating region 36. The heating region 36 includes multiple heating sub-regions 37 arranged in the second direction. At least some of the heating sub-regions 37 have different power densities. To be specific, some of the heating sub-regions 37 may have different power densities, or all of the heating sub-regions 37 may have different power densities. Battery cores 11 of the battery core row 10 at different positions have different heat dissipation rates. For example, battery cores 11 located on two ends of the battery core row 10 have higher heat dissipation rates, and battery cores 11 located at a middle part of the battery core row 10 have lower heat dissipation rates. Since the multiple heating sub-regions 37 are arranged in the heating region 36 in the second direction, and at least some of the heating sub-regions 37 have different power densities, the heat dissipation rates of the battery cores 11 at the different positions can be equalized, so that the battery cores 11 of the battery core row 10 have a relatively uniform temperature rising rate. In this way, the heating region 36 can heat the battery cores 11 of the battery core row 10 more uniformly.

In addition, through the arrangement of the multiple heating sub-regions 37, when a part of the heating region 36 is damaged or faulty, the heating region 36 can be replaced and repaired conveniently, which reduces repair costs. For example, when a part of the heating region 36 is damaged or faulty, only the heating sub-region 37 corresponding to the damaged or faulty part may be replaced, without a need to replace or repair the entire heating region 36.

Referring to FIG. 1 and FIG. 5, according to some embodiments of the present disclosure, in the second direction, power densities of the heating sub-regions 37 located at the middle part of the battery core row 10 are greater than power densities of the heating sub-regions 37 located on the two ends of the battery core row 10. The battery cores 11 located on the two ends of the battery core row 10 have fewer surrounding battery cores 11. Therefore, the battery cores 11 have relatively high heat dissipation rates. The battery cores 11 located at the middle part of the battery core row 10 have more surrounding battery cores 11. Therefore, the battery cores 11 have relatively low heat dissipation rates. Through the setting of the power densities of the heating sub-regions 37 located at the middle part of the battery core row 10 to be greater than the power densities of the heating sub-regions 37 located on the two ends of the battery core row 10, the heat dissipation rates of the battery cores 11 at the different positions can be equalized, so that the battery cores 11 located at the middle part of the battery core row 10 and the battery cores located on the two ends of the battery core row 10 have a relatively uniform temperature rising rate. In this way, the battery cores 11 at the different positions on the battery core row 10 have a relatively small temperature difference.

Referring to FIG. 1 and FIG. 5, according to some embodiments of the present disclosure, the multiple heating sub-regions 37 include two first heating sub-regions 371, two second heating sub-regions 372, two third heating sub-regions 373, and one fourth heating sub-region 374. The fourth heating sub-region 374 is located at the middle part of the battery core row 10 in the second direction. In the second direction, the fourth heating sub-region 374, the third heating sub-regions 373, the second heating sub-regions 372, and the first heating sub-regions 371 are arranged in sequence and have gradually increasing power densities in a direction from the middle part of the battery core row 10 to the two ends of the battery core row 10. In the direction from the middle part of the battery core row 10 to the two ends of the battery core row 10, the heat dissipation rates of the battery cores 11 of the battery core row 10 gradually increase. Since the two first heating sub-regions 371, the two second heating sub-regions 372, the two third heating sub-regions 373, and the fourth heating sub-region 374 are arranged, and the fourth heating sub-region 374, the third heating sub-regions 373, the second heating sub-regions 372, and the first heating sub-regions 371 are arranged in sequence and have gradually increasing power densities in the direction from the middle part of the battery core row 10 to the two ends of the battery core row 10, the heating region 36 can adapt to the battery cores 11 of the battery core row 10 with the different heat dissipation rates, so that the heating region 36 can heat the battery cores 11 of the battery core row 10 more uniformly.

Referring to FIG. 1 and FIG. 5, according to some embodiments of the present disclosure, in the second direction, a ratio of a size of each second heating sub-region 372 to a size of each first heating sub-region 371 is in a range of 1.8 to 2, a ratio of a size of each third heating sub-region 373 to the size of the first heating sub-region 371 is in a range of 1.7 to 1.9, and a ratio of a size of the fourth heating sub-region 374 to the size of the first heating sub-region 371 is in a range of 2.3 to 3.6. In the direction from the middle part of the battery core row 10 to the two ends of the battery core row 10, many battery cores 11 with lower heat dissipation rates are located at the middle part, which occupy a largest space, and few battery cores 11 with higher heat dissipation rates are located on the two ends, which occupy a smaller space. Battery cores 11 located in middle sections between the middle part and the two ends may be divided into two regions based on the heat dissipation rates of the battery cores 11. A quantity of battery cores 11 in each region is greater than the quantities of the battery cores 11 with higher heat dissipation rates located on the two ends, and is less than the quantity of the battery cores 11 with lower heat dissipation rates located at the middle part. The battery cores in the middle sections occupy a larger space.

Through the setting of the ratio of the size of the second heating sub-region 372 to the size of the first heating sub-region 371 to be in the range of 1.8 to 2, the setting of the ratio of the size of the third heating sub-region 373 to the size of the first heating sub-region 371 to be in the range of 1.7 to 1.9, and the setting of the ratio of the size of the fourth heating sub-region 374 to the size of the first heating sub-region 371 to be in the range of 2.3 to 3.6, the heating region 36 is properly divided, so that the heating region 36 can adapt to the battery cores 11 of the battery core row 10 with the different heat dissipation rates. In this way, the heating region 36 can heat the battery cores 11 of the battery core row 10 more uniformly.

Referring to FIG. 1 and FIG. 5, according to some embodiments of the present disclosure, the heating film 30 includes the heating structure 33 and the thermally conductive insulation film 31. The heating structure 33 is connected with the side of the thermally conductive insulation film 31 facing the thermally conductive plate 21. The heating film 30 includes the heating structure 33 and the thermally conductive insulation film 31. The heating structure 33 and at least part of the thermally conductive insulation film 31 form the heating region 36. The heating film 30 is connected to the thermally conductive plate 21 through a back adhesive layer. In addition, the heating structure 33 connected with the side of the thermally conductive insulation film 31 facing the thermally conductive plate 21 can be fixed to the thermally conductive plate 21. In this way, the fitting is simple, and the connection is stable.

The heating structure 33 includes multiple heating sub-structures. The multiple heating sub-structures are successively arranged in series or in parallel. The heating sub-structures and the heating sub-regions 37 are of a same quantity and are in one-to-one correspondence. Since the multiple heating sub-structures are successively arranged in series or in parallel, the connection manner is relatively simple, and the heating region 36 can be conveniently divided into the multiple heating sub-regions 37 with the different power densities.

For example, the heating structure 33 is a heating wire. A cross-sectional area of the heating wire may be adjusted, to adjust a resistance value of the heating wire. In this way, different heating sub-regions 37 in one-to-one correspondence with different heating wires have different power densities. If multiple heating wires are arranged in series, a larger cross-sectional area of each heating wire leads to a smaller resistance value of the heating wire and a smaller power density of the heating sub-region 37 corresponding to the heating wire. If the multiple heating wires are arranged in parallel, a larger cross-sectional area of each heating wire leads to a smaller resistance value of the heating wire and a smaller power density of the heating sub-region 37 corresponding to the heating wire.

Referring to FIG. 1 to FIG. 5, a vehicle in an embodiment of a third aspect of the present disclosure includes the battery assembly in the embodiment of the above second aspect of the present disclosure. For example, the vehicle may be an electric vehicle.

In the vehicle in this embodiment of the present disclosure, the above battery assembly 100 is arranged, the temperature regulation member 20 is arranged between two adjacent battery core rows 10 of the battery assembly 100, the temperature regulation member 20 includes the thermally conductive plate 21 and the heating film 30, and the heating film 30 is in thermally conductive connection or contact with the battery core 11, so that heat can be transferred to the battery core 11 to heat the battery core 11. In addition, each of the two sides of the thermally conductive plate 21 in the thickness direction is provided with the heating film 30, so that the temperature regulation member 20 between two battery core rows 10 can simultaneously heat the two battery core rows 10, thereby improving heating efficiency for the battery core 11.

In the description of this specification, descriptions provided with reference to the terms such as "an embodiment", "some embodiments", "an exemplary embodiment", "an example", "a specific example", or "some examples" mean that specific features, structures, materials, or characteristics described with reference to the embodiment or example are included in at least one embodiment or example of the present disclosure. In this specification, exemplary expressions of the above terms do not necessarily mean the same embodiment or example. In addition, the described specific features, structures, materials, or characteristics may be combined in a proper manner in any one or more embodiments or examples.

Although the embodiments of the present disclosure are shown and described, a person of ordinary skill in the art may understand that, various changes, modifications, replacements, and variations may be made to the embodiments without departing from the principle and spirit of the present disclosure. The scope of the present disclosure is defined by the appended claims and their equivalents.

## Claims

1. A temperature regulation member, comprising a thermally conductive plate and a heating film, each of two sides of the thermally conductive plate in a thickness direction being provided with the heating film, and the heating film being configured to heat a battery core.

2. The temperature regulation member according to claim 1, wherein the heating film comprises a heating region; the heating region is configured to heat the battery core; a projection of the heating region on a reference surface is a first projection; a projection of the thermally conductive plate on the reference surface is a second projection; the first projection is located in the second projection; and the reference surface is a plane perpendicular to the thickness direction of the thermally conductive plate.

3. The temperature regulation member according to claim 2, wherein a ratio of an area of the first projection to an area of the second projection is in a range of 40% to 60%.

4. The temperature regulation member according to claim 2, wherein a part of the thermally conductive plate located on an outer peripheral side of the heating region is a connection region; an adhesive layer is arranged in the connection region; and the adhesive layer is configured to connect to the battery core.

5. The temperature regulation member according to claim 4, wherein the adhesive layer is a thermally conductive adhesive layer.

6. The temperature regulation member according to claim 4, wherein a projection of the connection region on the reference surface is a third projection; and a ratio of an area of the third projection to an area of the second projection is in a range of 40% to 60%.

7. The temperature regulation member according to claim 1, wherein the heating film comprises a heating structure and a thermally conductive insulation film; and the heating structure is connected with a side of the thermally conductive insulation film facing the thermally conductive plate, preferably
wherein the side of the thermally conductive insulation film facing the thermally conductive plate has a back adhesive layer; and the heating film is connected to the thermally conductive plate through the back adhesive layer; or
wherein the thermally conductive insulation film comprises a first film region and a second film region; the heating structure is arranged in the first film region; the heating structure and the first film region jointly form a heating region; and the second film region surrounds an outer periphery of the first film region, or the second film region is located on a side of the first film region, or the second film region is arranged spaced away from the first film region.

8. The temperature regulation member according to claim 1, wherein a convex region and a concave region are formed on each of two sides of the thermally conductive plate in the thickness direction; the convex region and the concave region located on a same side of the thermally conductive plate in the thickness direction are alternately arranged in an extending direction of the thermally conductive plate; and the concave region is configured to connect to the battery core or contact the battery core, preferably
wherein a heating power of the convex region is less than a heating power of the concave region.

9. The temperature regulation member according to claim 1, wherein the heating film comprises a heating region; the heating region is configured to heat the battery core; the heating region comprises a plurality of heating sub-regions arranged in an extending direction of the thermally conductive plate; and at least some of the heating sub-regions have different power densities, preferably
wherein the heating film comprises a heating structure and a thermally conductive insulation film; the heating structure is connected with a side of the thermally conductive insulation film facing the thermally conductive plate; the heating structure and at least part of the thermally conductive insulation film form the heating region; the heating structure comprises a plurality of heating sub-structures; the plurality of heating sub-structures are successively arranged in series or in parallel; and the heating sub-structures and the heating sub-regions are of a same quantity and are in one-to-one correspondence.

10. The temperature regulation member according to claim 1, wherein the thermally conductive plate is even heat plate.

11. The temperature regulation member according to any of claims 1 to 10, wherein a heat exchange flowing channel for a heat exchange medium to flow is formed in the thermally conductive plate.

12. A battery assembly, comprising:
a plurality of battery core rows, arranged in a first direction, each battery core row comprising a plurality of battery cores arranged in a second direction, and the second direction intersecting the first direction; and
the temperature regulation member according to any of claims 1 to 11, the temperature regulation member being arranged between two adjacent battery core rows, and the heating film being in thermally conductive connection or contact with each battery core.

13. The battery assembly according to claim 12, wherein the second direction is perpendicular to the first direction; or
wherein the heating film is in direct contact with the battery core; or
wherein a ratio of a size of the thermally conductive plate in a third direction to a size of the battery core in the third direction is in a range of 50% to 80%; and the third direction, the second direction, and the first direction intersect each other; or
wherein a plurality of temperature collection points are arranged on a single battery core row; the plurality of temperature collection points on the single battery core row are arranged at intervals in the second direction; and a ratio of a quantity of the temperature collection points of the single battery core row to a quantity of the battery cores of the single battery core row is in a range of 1/4 to 1/2.

14. The battery assembly according to claim 12, wherein the heating film comprises a heating region; the heating region is configured to heat the battery core; the heating region comprises a plurality of heating sub-regions arranged in an extending direction of the thermally conductive plate; at least some of the heating sub-regions have different power densities; and in the second direction, power densities of the heating sub-regions located at a middle part of the battery core row are greater than power densities of the heating sub-regions located on two ends of the battery core row, preferably
wherein the plurality of heating sub-regions comprise two first heating sub-regions, two second heating sub-regions, two third heating sub-regions, and one fourth heating sub-region; the fourth heating sub-region is located at the middle part of the battery core row in the second direction; and in the second direction, the fourth heating sub-region, the third heating sub-regions, the second heating sub-regions, and the first heating sub-regions are arranged in sequence and have gradually increasing power densities in a direction from the middle part of the battery core row to the two ends of the battery core row, and more preferably
wherein in the second direction, a ratio of a size of each second heating sub-region to a size of each first heating sub-region is in a range of 1.8 to 2, a ratio of a size of each third heating sub-region to the size of the first heating sub-region is in a range of 1.7 to 1.9, and a ratio of a size of the fourth heating sub-region to the size of the first heating sub-region is in a range of 2.3 to 3.6.

15. A vehicle, comprising: the battery assembly according to any of claims 12 to 14.
